# EUROPEAN PATENT APPLICATION

(11) **EP 0 838 373 A2**
(43) Date of publication of application: **29.04.1998**
(21) Application number: 97118189.6
(22) Date of filing: 20.10.1997
(51) Int. Cl.: B60R 11/06

(54) **A holder for tools and for a jack for motor-vehicles, particularly motor-cars**

(30) Priority: 21.10.1996 IT TO960207 U
(71) Applicant: FIAT AUTO S.p.A., 10135 Torino (IT)
(72) Inventor: Cordero, Renato, 12048 Sommariva del Bosco, (Cuneo) (IT); Flego, Roberto, 10137 Torino (IT); Montrucchio, Ugo, 10060 Candiolo (Torino) (IT); Rossi, Roberto, 10136 Torino (IT)
(74) Representative: Serra, Francesco

(57) **Abstract**

A holder (2) for a motor-car jack (8) and for a plurality of tools (10, 12) is formed by a base (4) in which the jack (8) is fitted and by a lid (6). The base (4) has tabs (16, 18, 20, 22) to one (20) of which the lid (6) is articulated, tools for the maintenance of the motor-car being fixed on the face of the lid (6) which faces the base (4).

## Description

The present invention relates to a holder for tools and for a jack for motor-vehicles, particularly motor-cars.

A motor-car jack and tools such as the jack-operating handle, the plug spanner, the wheel-brace etc., are normally disposed in the concave side of the spare wheel, enclosed in pouches or soft containers.

These pouches or containers inevitably move when the motor-vehicle is in motion, striking the rim of the spare wheel or each other, causing annoying noises.

The object of the present invention is to provide a holder for tools and for a jack for motor-vehicles, particularly motor-cars, which prevents the above-mentioned problems and is of simple construction and inexpensive.

The present invention achieves the above-mentioned objects by means of a holder for tools and for a jack for motor-vehicles, particularly motor-cars, of the type disposed within the rim of the spare wheel on the concave side of the rim, having the specific characteristics recited in the following claims.

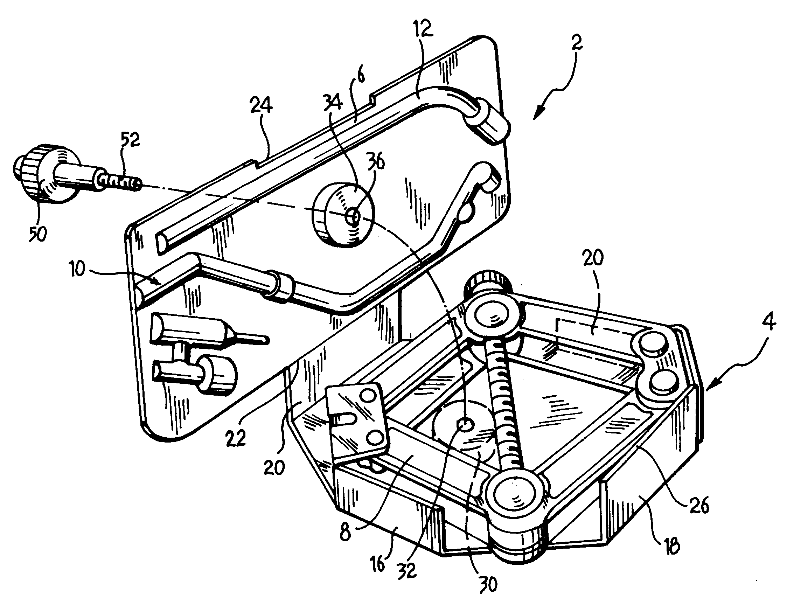

Further characteristics and advantages of the present invention will become clear in the course of the following detailed description, given purely by way of non-limiting example, with reference to the appended drawing which is a perspective view of the holder of the present invention, generally indicated 2.

The holder 2 is a substantially box-like body comprising a base 4 and a lid 6. The base 4 is for holding the jack 8 for a motor vehicle (not shown). The face of the lid 6 facing the base 4 carries tools such as the bar 10 for operating the jack 8, the tool 12 for unscrewing the wheel nuts, etc., fixed by known means such as, for example, resilient recesses.

The base 4 comprises a plurality of opposed, up-turned peripheral tabs 16, 18, 20, 22, substantially perpendicular to the base 4, disposed on the perimeter of the base 4, and facing towards the lid 6. The lid 6 is articulated to one of the tabs 16, 18, 20, 22, that is, the tab 22 in the drawing, for example, by means of a film hinge 23.

On its side opposite that which is articulated to the tab 20, the lid 6 has a seat 24 which, in use, can engage a corresponding projection 26 on the end of the tab 18 opposite that to which the lid 6 is articulated.

The base 4 comprises an appendage 30 which faces outwardly from the base 4 and has a through-hole 32. The lid 6 has an appendage 34 which faces the base 4 and in which a through-hole 36 is formed.

In use, after the jack 8 has been placed in the base 4, the lid 6 has been closed onto the base 4, and the holder has been placed in its seat in the spare wheel, the through-holes 32 and 36 in the respective appendages 30 and 34 are aligned, thus enabling a member 50 comprising a thread 52 to extend through the lid and engage a thread 52 in a threaded seat (not shown) formed in the bodywork of the motor-vehicle (generally in the floor), thus fixing the holder 2 and the spare wheel to the floor of the motor vehicle.

Naturally, the principle of the invention remaining the same, the forms of embodiment and details of construction may be varied widely with respect to those described and illustrated, without thereby departing from the scope of the present invention.

For example, in a further arrangement, not shown, solely the holder may be fixed directly to the floor of the motor vehicle, and the spare wheel may then be disposed on top of it with the concave portion of the rim adjacent the holder.

## Claims

1. A holder for tools and for a jack for motor-vehicles, particularly motor-cars, of the type disposed within the rim of the spare wheel on the concave side of the rim, characterized in that it comprises a box-like body (2) comprising a base (4) and a lid (6), the base (4) being intended to house the jack (8) and the face of the lid (6) which faces the base (4) being able to house at least one tool (10, 12) for the repair or maintenance of the motor-vehicle.

2. A holder according to Claim 1, characterized in that the base (4) comprises a plurality of tabs (16, 18, 20, 22) substantially perpendicular to the base (4), facing one another in pairs, disposed on the perimeter of the base (4), and integral therewith.

3. A holder according to Claim 2, characterized in that the tabs (16, 18, 20, 22) are separated by portions of the perimeter of the base (4) which are free of tabs (16, 18, 20, 22).

4. A holder according to any one of the preceding claims, characterized in that the lid (6) is articulated for pivoting on one of the tabs (20).

5. A holder according to any one of the preceding claims, characterized in that, on the side opposite that which is articulated to the tab (20), the lid (6) has a seat (24) which, when the lid (6) is in the closure position on the base (4), can engage a corresponding projection (26) on the end of the tab (18) opposite that to which the lid (6) is articulated.

6. A holder according to any one of the preceding claims, characterized in that the lid (6) and the base (4) have through-holes (32, 36) which face one another when the lid (6) is in the closure position on the base (4), and through which a fixing member (50) can extend, the fixing member (50) having a thread (52) for engaging in a corresponding threaded hole in the floor of the motor vehicle.
